(19) Europäisches Patentamt
European Patent Office
Office européen des brevets

(11) **EP 3 811 465 B1**

(12) **FASCICULE DE BREVET EUROPEEN**

(45) Date de publication et mention de la délivrance du brevet:
**06.09.2023 Bulletin 2023/36**

(21) Numéro de dépôt: **19731307.5**

(22) Date de dépôt: **21.06.2019**

(51) Classification Internationale des Brevets (IPC):
***H01Q 1/28*** *(2006.01)*

(52) Classification Coopérative des Brevets (CPC):
**H04B 17/12**

(86) Numéro de dépôt international:
**PCT/EP2019/066488**

(87) Numéro de publication internationale:
**WO 2019/243584 (26.12.2019 Gazette 2019/52)**

(54) **PROCÉDÉ DE CALIBRATION D'UNE ANTENNE SATCOM EN BANDE KA**

VERFAHREN ZUR KALIBRIERUNG EINER KA-BAND-SATCOM-ANTENNE

METHOD FOR CALIBRATING A KA BAND SATCOM ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2018 FR 1800655**

(43) Date de publication de la demande:
**28.04.2021 Bulletin 2021/17**

(73) Titulaire: **THALES**
**92400 Courbevoie (FR)**

(72) Inventeurs:
• **BOUTIGNY, Pierre-Henri**
**92622 Gennevilliers Cedex (FR)**
• **MAGDELAINE, Frédéric**
**92622 Gennevilliers Cedex (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2015 200 449 US-B1- 6 646 598**

**Description**

L'invention concerne un procédé de calibration d'une antenne Satcom en bande Ka utilisée notamment dans le domaine aéronautique.

Elle trouve son application dans toute application aéronautique ou dans d'autres domaines proposant à un utilisateur présent dans un véhicule en mouvement un accès internet.

Des exemples de procédé de calibration d'antenne ont été décrits par exemple dans US 2015/200449 A1 et US 6 646 598 B1.

La fourniture d'un accès internet sur des avions de ligne est un domaine émergent qui utilise des satellites ainsi qu'une antenne directive installée sur la carlingue d'un avion. Pour cette application, les besoins en bande passante sont importants et c'est pourquoi la bande Ka est largement utilisée. Cette bande Ka (20 GHz en réception et 30 GHz en émission) est relativement libre contrairement à la bande Ku (-12GHz) qui est largement déployée pour la diffusion télévision TV.

L'utilisation de cette bande de fréquence pose des problèmes techniques lors de l'installation et du pointage de l'antenne directive. En effet, ces antennes présentent des tailles relativement importantes et une géométrie rectangulaire « bas profil ». La grande dimension de l'antenne peut atteindre 70 cm.

A une fréquence de 30 GHz, une telle antenne doit être pointée vers le satellite avec une précision meilleure que 0,2°, sinon la perte de gain est relativement prohibitive.

Le pointage de l'antenne utilise des données des centrales inertielles de l'avion et l'on peut atteindre une précision de pointage de l'antenne de 0,1° avec les équipements de navigation à interférométrie laser. Cependant, l'installation de l'antenne sur la carlingue est beaucoup moins précise et l'on n'obtient pas mieux qu'une précision de un degré entre les référentiels des centrales inertielles et du support de l'antenne qui est souvent situé à plusieurs mètres en arrière de la voilure. Cette valeur de l'ordre de un degré doit être mesurée pour pouvoir être compensée.

L'art antérieur décrit des méthodes de calibration qui utilisent des moyens optiques, interférométrie laser ou autre, pour calibrer la direction de l'antenne.

L'objet de l'invention concerne un procédé ou une méthode qui permet de mesurer le biais d'installation de l'antenne de manière automatique et avec une précision plus importante que celle offerte par les techniques mises en oeuvre dans l'art antérieur. Suivant une nouvelle approche, le procédé utilise la réception du signal satellite obtenu pour plusieurs orientations de l'avion au sol pendant la phase de calibration. Lorsque les mesures sont obtenues, un calcul est effectué qui permet d'obtenir les données de biais du support d'antenne.

L'invention concerne un procédé de calibration d'une antenne positionnée sur un aéronef, ladite antenne étant protégée par un radôme et fonctionnant dans une bande adaptée pour assurer une communication internet à un utilisateur via un satellite, caractérisé en ce qu'il comporte au moins les étapes suivantes :

Définir un nombre n de positions d'angles pour l'aéronef situé dans une zone de calibration, avec n supérieur à un,
Mesurer la valeur de l'orientation de l'antenne pour chaque position n, [$Aa(n)$, $Ea(n)$], où $Aa(n)$, $Ea(n)$ correspondent à l'azimut et l'élévation de l'antenne pour une position n,
Définir l'orientation théorique de l'antenne [$Aa(n)^*$, $Ea(n)^*$] en tenant compte de la valeur de tangage (pitch), de la valeur roulis (roll), de la valeur de lacet (heading) pour l'aéronef, pour chaque position n, et des valeurs d'orientation du satellite [$Ar(n)$, $Er(n)$]:

$$[Aa(n)^*, Ea(n)^*] = \mathsf{F}(\mathsf{H}(n), \mathsf{P}(n), \mathsf{R}(n), \delta\mathsf{H}, \delta\mathsf{P}, \delta\mathsf{R}, \delta\mathsf{E}, Ar(n), Er(n)),$$

où F est une fonction géométrique choisie,
avec $Ar(n)$, $Er(n)$ les coordonnées dudit satellite,

Définir un critère C :

$$C = \sum (Aa(n) - Aa(n)*)^2 + (Ea(n) - Ea(n)*)^2$$

Minimiser la valeur du critère C afin de déterminer les valeurs de biais ($\delta\mathsf{H}$, $\delta\mathsf{P}$, $\delta\mathsf{R}$, $\delta\mathsf{E}$) à partir des valeurs [$Aa^*(n)$, $Ea^*(n)$] et utiliser lesdites valeurs de biais pour minimiser les écarts entre les angles mesurés et les angles théoriques.

Selon un mode de réalisation, le procédé utilise huit angles de mesures, pour chaque orientation de l'antenne, et recherche le maximum de signal du satellite reçu sur l'antenne, lorsque ce maximum est trouvé les valeurs suivantes sont mémorisées :

$$H(n) \, , \, P(n) \, , \, R(n),$$

$$[Ar(n), Er(n)]$$

$$[Aa(n), Ea(n)],$$

le procédé utilise ensuite une méthode d'optimisation pour minimiser la valeur C et calculer les valeurs de biais ($\delta$H, $\delta$P, $\delta$R, $\delta$E) qui seront utilisées pour le pointage de l'antenne.

On minimise le critère C pour atteindre la valeur zéro.

Le procédé est utilisé, par exemple, pour calibrer une antenne configurée pour fonctionner sur un avion et dans la bande Ka.

L'invention concerne aussi un dispositif de calibration d'une antenne positionnée sur un aéronef et fonctionnant dans une bande adaptée pour assurer une communication internet à un utilisateur via un satellite caractérisé en ce qu'il comporte un processeur configuré pour exécuter les étapes du procédé selon l'invention.

Le dispositif est notamment utilisé pour calibrer une antenne fonctionnant dans la bande Ka afin d'assurer une liaison de type internet pour des utilisateurs de l'avion.

D'autres caractéristiques et avantages de la présente invention apparaîtront mieux à la lecture de la description d'exemples de réalisation annexée des figures qui représentent :

- Figure 1, un schéma d'avion positionné dans une zone de calibration, et

- Figure 2, un exemple de plusieurs positions de l'avion choisies pour la calibration.

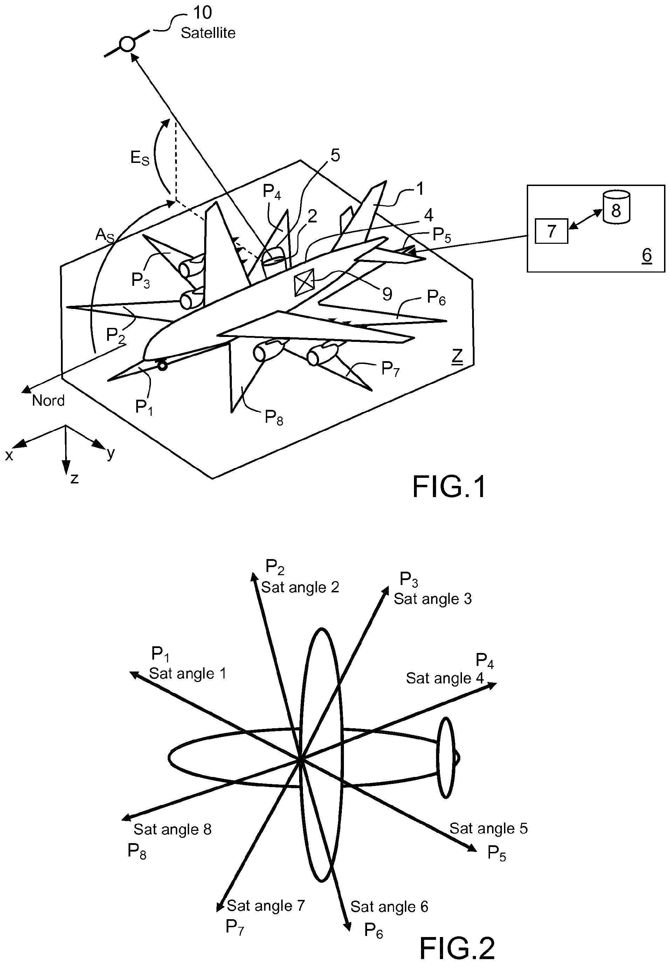

La figure 1 représente un avion 1 équipé d'une antenne 2 montée via un support d'antenne 3 sur la carlingue 4 de l'avion et protégée par un radôme 5. L'antenne est choisie pour assurer une communication internet lorsque l'avion sera en vol ou à terre avant la phase de décollage, via par exemple l'utilisation d'un satellite 10.

L'antenne est reliée à un dispositif de calibration 6 pouvant être positionné dans l'avion, qui comprend notamment un processeur 7 qui va exécuter les étapes du procédé selon l'invention, une mémoire 8 permettant de mémoriser les tables utilisées au cours du procédé et les résultats des valeurs de biais pour d'éventuelles futures utilisations. L'avion comprend aussi une centrale inertielle 9 configurée pour transmettre des informations au processeur.

Pour la mise en oeuvre du procédé selon l'invention, l'avion est installé sur une zone Z permettant, par exemple, d'effectuer huit rotations d'environ 45°, P1 à P8, (par exemple la zone de calibration des compas magnétiques).

Le bais d'installation de l'antenne peut être décrit par quatre valeurs angulaires ($\delta$H, $\delta$P, $\delta$R, $\delta$E), les trois premières correspondent à l'orientation relative du support antenne par rapport à la référence de navigation de l'avion, lacet, tangage, roulis, plus connues sous les abréviations anglo-saxonnes (Heading H, Pitch P, Roll R) et la quatrième E correspond au décalage de l'axe élévation de l'antenne.

Au niveau de la zone de calibration Z, le satellite 10 utilisé est vu sous les angles (As, Es), qui correspondent à son azimut et son élévation locales, et l'orientation de l'avion est donnée par les trois valeurs (H, P, R: Heading Pitch Roll) délivrées par la centrale inertielle.

Lorsque l'antenne 2 est pointée sur le satellite 10 (la position de pointage est, par exemple, détectée par la réception maximum d'un signal), l'orientation de l'antenne relativement à son support est décrite par les deux angles (*Aa*, *Ea*) qui correspondent à l'azimut et l'élévation de l'antenne (non représentées pour des raisons de simplification).

L'antenne est en général protégée par un radôme 5 qui introduit une réfraction du signal du satellite. Cette valeur de réfraction est contenue dans une table fournie par le constructeur du radôme. Cette table donne la réfraction de l'onde antenne en fonction de son azimut et élévation. Ainsi, le satellite vu à travers le radôme a pour coordonnées angulaires :

$$\text{En Azimut : } Ar = As + \text{Ta}(Aa)$$

$$\text{En élévation : } Er = Es + \text{Te}(Ea)$$

T (Ta, Te) étant la table de réfraction du radôme tabulée en azimut et élévation.

Lorsque le maximum de réception $S_{max}$ du signal satellite a été détecté au niveau de l'antenne, l'orientation de l'antenne peut s'exprimer de la manière suivante :

$$[Aa^*, Ea^*] = F(H, P, R, \delta H, \delta P, \delta R, \delta E, Ar, Er)$$

F est une fonction purement géométrique qui permet de calculer l'orientation théorique de l'antenne [*Aa\**, *Ea\**] à partir de changements de repères mathématiques. Cette fonction est classique dans le domaine des communications par satellite et ne sera pas détaillée.

En considérant un repère aéronautique avec l'axe z vers le bas :

- Rx ; Ry ; Rz , une matrice de rotation autour des axes x,y,z,
- R ; P ;H, des données de la centrale de navigation (orientation avion),
- *Ar* et *Er,* l'orientation locale du satellite corrigée de la réfraction radôme,
- *Aa* et *Ea,* l'azimut et l'élévation de l'antenne,
- ($\delta H,\delta P,\delta R,\delta E$) les valeurs inconnues à trouver,

on exprime la relation entre les différents paramètres sous la forme d'un vecteur :

$$V = \begin{pmatrix} Vx \\ Vy \\ Vz \end{pmatrix} = Rx(-\delta R) * Ry(-\delta P) * Rz(-\delta H) * Rx(-R) * Ry(-P) * Rz(-H)$$

$$* Rz(Ar) * Ry(Er) * \begin{pmatrix} 1 \\ 0 \\ 0 \end{pmatrix}$$

$$Aa *= Atan\left(\frac{Vy}{Vx}\right)$$

$$Ea *= Atan\left(\frac{-Vz}{\sqrt{Vx^2 + Vy^2}}\right)$$

Comme la valeur des biais est inconnue, l'orientation théorique [*Aa\**, *Ea\**] ne peut pas être calculée, par contre il est possible d'obtenir par mesure une valeur proche [*Aa*, *Ea*], par exemple via la recherche du signal maximal du signal SNR reçu sur l'antenne.

Le procédé selon l'invention permettant de calculer les biais consiste à multiplier les mesures des deux angles [*Aa*, *Ea*] et ensuite à utiliser une méthode d'optimisation connue de l'homme du métier qui va permettre de trouver le meilleur biais qui minimise un certain critère.

Si l'on indexe les mesures par un indice n, on obtient :

$$[Aa(n)^*, Ea(n)^*] = F(H(n, P(n), R(n), \delta H, \delta P, \delta R, \delta E, Ar(n), Er(n),$$

pour la mesure n, et
on prend comme critère à optimiser :

$$C = \sum (Aa(n) - Aa(n)*)^2 + (Ea(n) - Ea(n)*)^2.$$

Lorsque la valeur de C est minimale, le biais correspondant permet de minimiser l'écart entre les valeurs mesurées des deux angles (*Aa*, *Ea*) qui correspondent à l'azimut et l'élévation antenne et les valeurs calculées.

Le procédé selon l'invention est, par exemple, implémenté sous la forme d'un logiciel au niveau du processeur. Selon un exemple illustré à la figure 2, le procédé détermine huit angles de mesures en évitant de pointer vers la queue de l'avion afin d'éviter un blocage du signal.

Pour chaque orientation (angle fixé, pour chaque valeur de n), le logiciel effectue un balayage afin de rechercher le maximum de signal du satellite S$_{max}$, lorsque ce maximum est trouvé les valeurs suivantes sont mémorisées, pour chaque valeur de n :

H(n), P(n) , R(n),
Ar(n), Er(n), l'orientation locale du satellite corrigée de la réfraction radôme,
Aa(n), Ea(n), l'azimut et l'élévation de l'antenne.

Lorsque les huit mesures ont été réalisées, le logiciel utilise une méthode d'optimisation pour minimiser la valeur de C. Lorsque ce minimum est obtenu, le logiciel affiche les valeurs de biais ($\delta$H, $\delta$P, $\delta$R, $\delta$E) à utiliser pour le pointage de l'antenne. La méthode d'optimisation est connue de l'homme du métier et ne sera pas détaillée.

La valeur de C est affichée, par exemple, au niveau d'un dispositif d'affichage reliée au processeur, car elle correspond à un indicateur de qualité, on doit obtenir une valeur proche de zéro.

Les valeurs de biais sont stockées dans un fichier utilisé localement par le contrôleur d'antenne et sont aussi transmises vers une base de données générale d'installation pour pouvoir être réutilisées lors d'opérations de maintenance.

Le procédé selon l'invention offre une méthode de calibration précise.

## Revendications

**1.** - Procédé de calibration d'une antenne (2) positionnée sur un aéronef (1) ladite antenne étant protégée par un radôme (5) et fonctionnant dans une bande adaptée pour assurer une communication internet à un utilisateur via un satellite (10), comportant les étapes suivantes :

Définir un nombre n de positions d'angles pour l'aéronef situé dans une zone de calibration, avec n supérieur à un,
Mesurer la valeur de l'orientation de l'antenne pour chaque position n, [Aa(n), Ea(n)], où Aa(n), Ea(n) correspondent à l'azimut et l'élévation de l'antenne pour une position **caractérisé en ce qu'**il comporte en outre les étapes Définir l'orientation théorique de l'antenne [Aa(n)*, Ea(n)*] en tenant compte de la valeur de tangage, de la valeur roulis, de la valeur de lacet pour l'aéronef pour chaque position n, et des valeurs d'orientation du satellite

$$[Ar(n), Er(n)]:$$

$$[Aa(n)^{*}, Ea(n)^{*}] = F(H(n) , P(n) , R(n) , \delta H , \delta P , \delta R , \delta E , Ar(n), Er(n)),$$

où F est une fonction géométrique choisie,
avec Ar(n), Er(n) les coordonnées dudit satellite Définir un critère C :

$$C = \sum (Aa(n) - Aa(n)*)^2 + (Ea(n) - Ea(n)*)^2$$

Minimiser la valeur du critère C afin de déterminer les valeurs de biais ($\delta$H, $\delta$P, $\delta$R, $\delta$E) à partir des valeurs [Aa*(n) , Ea*(n)] et utiliser lesdites valeurs de biais pour minimiser les écarts entre les angles mesurés et les angles théoriques.

**2.** - Procédé selon la revendication 1 **caractérisé en ce que** l'on détermine huit angles de mesures, pour chaque orientation de l'antenne, on recherche le maximum de signal du satellite reçu sur l'antenne, lorsque ce maximum est trouvé les valeurs suivantes sont mémorisées :

$$H(n) , P(n) , R(n),$$

$$[Ar(n), Er(n)]$$

$$[Aa(n), Ea(n)]$$

On utilise une méthode d'optimisation pour minimiser la valeur C et calculer les valeurs de biais (δH, δP, δR, δE) à utiliser pour le pointage de l'antenne.

3. - Procédé selon l'une des revendications 1 ou 2 **caractérisé en ce que** l'on minimise le critère C pour atteindre la valeur zéro.

4. - Procédé selon l'une des revendications 1 à 3 **caractérisé en ce que** l'on calibre une antenne configurée pour fonctionner sur un avion et dans la bande Ka.

5. - Dispositif de calibration d'une antenne (2) positionnée sur un aéronef et fonctionnant dans une bande adaptée pour assurer une communication internet à un utilisateur via un satellite (10) **caractérisé en ce qu'**il comporte un processeur (7) configuré pour exécuter les étapes du procédé selon l'une des revendications 1 à 4.

6. - Dispositif de calibration selon la revendication 5 pour une antenne fonctionnant dans la bande Ka.

**Patentansprüche**

1. Verfahren zum Kalibrieren einer auf einem Luftfahrzeug (1) positionierten Antenne (2), wobei die Antenne durch ein Radom (5) geschützt ist und in einem Band arbeitet, das zum Sicherstellen von Internetkommunikation mit einem Benutzer über einen Satelliten (10) ausgelegt ist, das die folgenden Schritte aufweist:

   Definieren einer Anzahl n von Winkelpositionen für das Luftfahrzeug, die sich in einer Kalibrierungsregion befinden, wobei n größer als eins ist,
   Messen des Wertes der Orientierung der Antenne für jede Position n, [Aa(n),Ea(n)], wobei *Aa(n), Ea(n)* dem Azimut und der Elevation der Antenne für eine Position entsprechen, **dadurch gekennzeichnet, dass** es ferner die folgenden Schritte aufweist:
   Definieren der theoretischen Orientierung der Antenne [*Aa(n)\**, *Ea(n)\**] unter Berücksichtigung des Nickwertes, des Rollwertes und des Gierwertes für das Luftfahrzeug für jede Position n und der Satellitenorientierungswerte [*Ar(n)*, *Er(n)*]:

   [*Aa(n)\**, *Ea(n)\**] = F(H(n), P(n), R(n), δH, δP, δR, δE, Ar(n), Er(n)), wobei F eine gewählte geometrische Funktion ist,
   wobei *Ar(n), Er(n)* die Koordinaten des Satelliten sind;
   Definieren eines Kriteriums C:

$$C = \sum (Aa(n) - Aa(n)*)^2 + (Ea(n) - Ea(n)*)^2$$

   Minimieren des Wertes des Kriteriums C, um auf der Basis der Werte [Aa\*(n), Ea\*(n)] die Bias-Werte (δH, δP, δR, δE) zu bestimmen und diese Bias-Werte zum Minimieren der Differenzen zwischen den gemessenen Winkeln und den theoretischen Winkeln zu verwenden.

2. Verfahren nach Anspruch 1, **dadurch gekennzeichnet, dass** acht Messwinkel für jede Orientierung der Antenne bestimmt werden und das maximale Signal des Satelliten, das von der Antenne empfangen wird, gesucht wird, und wenn dieses Maximum gefunden ist, die folgenden Werte gespeichert werden:

$$H(n), P(n), R(n),$$

$$[Ar(n), Er(n)]$$

$$[Aa(n), Ea(n)]$$

wobei ein Optimierungsverfahren zum Minimieren des Wertes C und zum Berechnen der für die Ausrichtung der Antenne zu verwendenden Bias-Werte ($\delta$H, $\delta$P, $\delta$R, $\delta$E) verwendet wird.

3.  Verfahren nach einem der Ansprüche 1 oder 2, **dadurch gekennzeichnet, dass** das Kriterium C minimiert wird, um den Wert Null zu erreichen.

4.  Verfahren nach einem der Ansprüche 1 bis 3, **dadurch gekennzeichnet, dass** eine für den Betrieb in einem Flugzeug und im Ka-Band konfigurierte Antenne kalibriert wird.

5.  Vorrichtung zum Kalibrieren einer Antenne (2), die in einem Luftfahrzeug positioniert ist und in einem Band arbeitet, das zum Sicherstellen von Internetkommunikation mit einem Benutzer über einen Satelliten (10) ausgelegt ist, **dadurch gekennzeichnet, dass** sie einen Prozessor (7) umfasst, der zum Ausführen der Schritte des Verfahrens nach einem der Ansprüche 1 bis 4 konfiguriert ist.

6.  Kalibrierungsvorrichtung nach Anspruch 5 für eine im Ka-Band arbeitende Antenne.

**Claims**

1.  A method for calibrating an antenna (2) positioned on an aircraft (1), said antenna being protected by a radome (5) and operating in a band suitable for providing Internet communication to a user via a satellite (10), having the following steps:

    Defining a number n of angle positions for the aircraft located in a calibration region, where n is greater than one,
    Measuring the value of the orientation of the antenna for each position n,
    [*Aa(n)*, *Ea(n)*], where *Aa(n)*, *Ea(n)* correspond to the azimuth and the elevation of the antenna for a position **characterised in that** it further has the steps of:

    Defining the theoretical orientation of the antenna [*Aa(n)\**, *Ea(n)\**] taking into account the pitch value, the roll value and the heading value for the aircraft for each position n, and the satellite orientation values [*Ar(n)*, *Er(n)*]:

$$[Aa(n)^{*}, Ea(n)^{*}] = F(H(n), P(n), R(n), \delta H, \delta P, \delta R, \delta E, Ar(n), Er(n)),$$

    where F is a chosen geometric function,
    where *Ar(n)*, *Er(n)* are the coordinates of said satellite
    Defining a criterion C:

$$C = \sum (Aa(n) - Aa(n)*)^2 + (Ea(n) - Ea(n)*)^2$$

    Minimising the value of the criterion C in order to determine the bias values ($\delta$H, $\delta$P, $\delta$R, $\delta$E) from the values [*Aa\*(n)*, *Ea\*(n)*] and using said bias values to minimise the differences between the measured angles and the theoretical angles.

2.  The method according to claim 1, **characterised in that** eight measurement angles are determined, for each orientation of the antenna, and the maximum signal from the satellite received on the antenna is sought, when this maximum is found, the following values are stored:

$$H(n), P(n), R(n),$$

$$[Ar(n), Er(n)]$$

$$[Aa(n), Ea(n)]$$

An optimisation method is used to minimise the value C and calculate the bias values ($\delta$H, $\delta$P, $\delta$R, $\delta$E) to be used for pointing the antenna.

3. The method according to one of claims 1 or 2, **characterised in that** the criterion C is minimised to achieve the value zero.

4. The method according to one of claims 1 to 3, **characterised in that** an antenna configured so as to operate on an aircraft and in the Ka band is calibrated.

5. A device for calibrating an antenna (2) positioned on an aircraft and operating in a band suitable for providing Internet communication to a user via a satellite (10), **characterised in that** it comprises a processor (7) configured so as to execute the steps of the method according to one of claims 1 to 4.

6. The calibration device according to claim 5 for an antenna operating in the Ka band.

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015200449 A1
- US 6646598 B1